# EUROPEAN PATENT APPLICATION

(11) **EP 4 517 106 A1**
(43) Date of publication of application: **05.03.2025**
(21) Application number: 24197417.9
(22) Date of filing: 29.08.2024
(51) Int. Cl.: F15B 9/00, F15B 9/09, F15B 19/00, F15B 20/00, F15B 21/08, G01M 13/00, G01M 99/00, G05B 9/02, G05B 19/048, F15B 13/04

(54) **DYNAMIC TESTING SYSTEM DIAGNOSTICS**

(30) Priority: 01.09.2023 US 202363580102 P
(71) Applicant: Illinois Tool Works Inc., Glenview IL 60025 (US)
(72) Inventor: HENNEN, James, Glenview, 60025 (US); KUGEL, Ian, Glenview, 60025 (US); BYRON, Tom, Glenview, 60025 (US); CARLSON, Kevin, Glenview, 60025 (US); THURMES, Kevin, Glenview, 60025 (US)
(74) Representative: HGF

(57) **Abstract**

A dynamic testing system includes a test station and at least one controller. The test station includes a hydraulic actuator configured to drive an actuation of a test subject using a hydraulic fluid flow, and a control valve that includes a housing, a valve body contained within the housing having a position that controls a flow rate and direction of the hydraulic fluid flow, a valve body driver configured to adjust the position of the valve body based on a reference signal, and a valve position sensor configured to output a position signal that is indicative of the position of the valve body. The at least one controller is configured to obtain a current position of the valve body using the position signal, obtain a diagnostic reference, detect a diagnostic condition based on a difference between the current position and the diagnostic reference, and generate a diagnostic signal.

## Description

### CROSS-REFERENCE TO RELATED APPLICATIONS

This application claims the benefit of priority from U.S. Provisional Patent Application No. 63/580,102 filed September 1, 2023 for "Dynamic Testing System Diagnostics," the content of which is hereby incorporated by reference.

### FIELD

Embodiments of the present disclosure generally relate to test stations of dynamic testing systems and, more particularly, to speed control of a hydraulic actuator of a test station.

### BACKGROUND

Dynamic testing systems, such as those developed by MTS Systems Corporation, include test stations that perform various tests through the application of loads and displacements to a test subject using hydraulic actuators in accordance with a test program. Test stations may include, for example, a vehicle testing station that applies simulated driving conditions to a mobile vehicle, or a building testing station that applies simulated seismic activity to a building.

The actuators of the test stations are driven by hydraulic fluid flows. The actuations performed by each actuator are controlled using a control valve (e.g., proportional control valve) that regulates the flow rate and direction of the hydraulic fluid flow through the actuator.

Test stations may experience various types of malfunctions. Some of these malfunctions may relate to leaks along hydraulic fluid flow paths, such as at the control valves, the hydraulic actuators or other components of the test station. Such leaks reduce the efficiency at which the test station operates. Additionally, such leaks may be an early indication of the potential for a more serious failure.

Other possible malfunctions relate to the accuracy at which the hydraulic actuators perform programmed or commanded actuations. For example, it is important that movement actuations of a test subject accurately reflect the desired movement indicated by the test program to ensure that the test is properly carried out and produces valid test results. The accuracy at which the hydraulic actuators perform programmed or commanded actuations is also important for safety reasons, such as by ensuring that maximum speed of the actuations does not exceed a safety threshold when workers are present.

Accordingly, it is important to detect these and other test station malfunctions as early as possible.

### SUMMARY

Embodiments of the present disclosure relate to diagnostic methods for dynamic testing systems and dynamic testing systems configured to perform the methods.

One embodiment of a dynamic testing system includes a test station and at least one controller. The test station includes a hydraulic actuator configured to drive an actuation of a test subject using a hydraulic fluid flow, and a control valve. The control valve includes a housing, a valve body contained within the housing having a position that controls a flow rate and direction of the hydraulic fluid flow, a valve body driver configured to adjust the position of the valve body based on a reference signal, and a valve position sensor configured to output a position signal that is indicative of the position of the valve body. The at least one controller is configured to obtain a current position of the valve body using the position signal, obtain a diagnostic reference, detect a diagnostic condition based on a difference between the current position and the diagnostic reference, and generate a diagnostic signal indicating the detected diagnostic condition.

In some embodiments, the hydraulic actuator includes a cylinder and an actuator rod including a piston contained within the cylinder, and movement of the piston and the actuator rod relative to the cylinder drives the actuation.

In some embodiments, the housing of the control valve includes an inlet port coupled to a supply of high pressure hydraulic fluid, an outlet port coupled to a low pressure return reservoir, a first port coupled to a first working volume formed by an interior of the cylinder and the piston and a second port coupled to a second working volume formed by the interior of the cylinder and the piston, and the position of the valve body directs the hydraulic fluid flow received at the inlet port to one of the first and second ports or neither of the first and second ports and controls a flow rate of the hydraulic fluid flow.

In some embodiments, the test station includes an actuation sensor configured to generate a feedback signal that is indicative of a parameter of the actuation, the at least one controller is configured to generate a control reference signal corresponding to a desired actuation based on a test program and generate an actuator command signal based on a difference between the control reference signal and the feedback signal, and the actuator command signal directs the valve body driver to adjust the position of the valve body.

In some embodiments, the diagnostic reference includes a maximum speed of the actuator rod.

In some embodiments, the diagnostic reference includes an actuation parameter relating to the feedback signal.

In some embodiments, the actuation sensor comprises a displacement sensor, the feedback signal indicates a direction of movement or speed of the actuator rod relative to the cylinder and the actuation parameter relates to the direction of movement or speed indicated by the feedback signal.

In some embodiments, the actuation sensor comprises a load cell, the feedback signal indicates a force applied by the actuator and the actuation parameter relates to the force indicated by the feedback signal.

In some embodiments, the diagnostic condition comprises a malfunction of a displacement sensor, a malfunction of an actuation sensor, or a leak of hydraulic fluid.

In some embodiments, the current position of the valve body is obtained by the at least one controller during a performance of a test program by the test station and the diagnostic reference includes an expected position of the valve body that is based on at least one prior performance of the test program.

In some embodiments, the expected position of the valve body is obtained based on a mapping of positions of the valve body over time during the at least one prior performance of the test program stored in a computer-readable medium.

In some embodiments, the at least one controller forms the mapping through a process comprising generating a plurality of the actuator command signals over a test period during a performance of the test program, obtaining a plurality of positions of the valve body over the test period, forming the mapping of the positions over the test period, and storing the mapping in the computer-readable medium.

In some embodiments, the valve body driver comprises a servo or a solenoid and the valve body comprises a spool or a piston.

In some embodiments, the at least one controller is configured to perform a safety measure when the difference meets a threshold condition.

In some embodiments, the safety measure includes issuing an audible and/or visible alarm or signal, issuing an electronic notification, directing the valve body driver to adjust the position of the valve body to restrict or block the hydraulic fluid flow to the hydraulic actuator, and/or closing a safety input valve controlling the flow of the hydraulic fluid to the hydraulic actuator.

One method controls a dynamic testing system, which includes a test station and at least one controller. The test station includes a hydraulic actuator configured to drive an actuation of a test subject using a hydraulic fluid flow, and a control valve. The control valve includes a housing, a valve body contained within the housing having a position that controls a flow rate and direction of the hydraulic fluid flow, a valve body driver configured to adjust the position of the valve body based on a reference signal, and a valve position sensor configured to output a position signal that is indicative of the position of the valve body. In the method, which is performed by the at least one controller, a current position of the valve body is obtained using the position signal and a diagnostic reference is obtained. A diagnostic condition is detected based on a difference between the current position and the diagnostic reference, and a diagnostic signal indicating the detected diagnostic condition is generated.

In some embodiments, the hydraulic actuator includes a cylinder and an actuator rod including a piston contained within the cylinder, and movement of the piston and the actuator rod relative to the cylinder drives the actuation.

In some embodiments, the housing of the control valve includes an inlet port coupled to a supply of high pressure hydraulic fluid, an outlet port coupled to a low pressure return reservoir, a first port coupled to a first working volume formed by an interior of the cylinder and the piston and a second port coupled to a second working volume formed by the interior of the cylinder and the piston.

In some embodiments, the position of the valve body directs the hydraulic fluid flow received at the inlet port to one of the first and second ports or neither of the first and second ports and controls a flow rate of the hydraulic fluid flow.

In some embodiments, the test station includes an actuation sensor configured to generate a feedback signal that is indicative of a parameter of the actuation, and the method includes generating a control reference signal corresponding to a desired actuation based on a test program and generating an actuator command signal based on a difference between the control reference signal and the feedback signal. In some embodiments, the actuator command signal is used to direct the valve body driver to adjust the position of the valve body.

In some embodiments, the diagnostic reference includes a maximum speed of the actuator rod.

In some embodiments, the diagnostic reference includes an actuation parameter relating to the feedback signal.

In some embodiments, the actuation sensor comprises a displacement sensor, the feedback signal indicates a direction of movement or speed of the actuator rod relative to the cylinder and the actuation parameter relates to the direction of movement or speed indicated by the feedback signal.

In some embodiments, the actuation sensor comprises a load cell, the feedback signal indicates a force applied by the actuator and the actuation parameter relates to the force indicated by the feedback signal.

In some embodiments, the diagnostic condition comprises a malfunction of a displacement sensor, a malfunction of an actuation sensor, or a leak of hydraulic fluid.

In some embodiments, the current position of the valve body is obtained by the at least one controller during a performance of a test program by the test station and the diagnostic reference includes an expected position of the valve body that is based on at least one prior performance of the test program.

In some embodiments, the expected position of the valve body is obtained based on a mapping of positions of the valve body over time during the at least one prior performance of the test program stored in a computer-readable medium.

In some embodiments, the method includes forming the mapping using the at least one controller comprising generating a plurality of the actuator command signals over a test period during a performance of the test program, obtaining a plurality of positions of the valve body over the test period, forming the mapping of the positions over the test period and storing the mapping in the computer-readable medium.

In some embodiments, the valve body driver comprises a servo or a solenoid and the valve body comprises a spool or a piston.

In some embodiments, the method includes performing a safety measure when the difference meets a threshold condition.

In some embodiments, the safety measure includes issuing an audible and/or visible alarm or signal, issuing an electronic notification, directing the valve body driver to adjust the position of the valve body to restrict or block the hydraulic fluid flow to the hydraulic actuator, and/or closing a safety input valve controlling the flow of the hydraulic fluid to the hydraulic actuator.

Another embodiment of a dynamic testing system includes a test station and at least one controller. The test station includes a plurality of hydraulic actuators, each configured to receive a hydraulic fluid flow and drive an actuation of a test subject using the hydraulic fluid flow during a test, and a plurality of control valves, each control valve corresponding to one of the hydraulic actuators. Each control valve includes a housing, a valve body contained within the housing having a position that controls a flow rate and direction of the corresponding hydraulic fluid flow, a valve body driver configured to adjust the position of the valve body based on a reference signal, and a valve position sensor configured to output a position signal that is indicative of the position of the valve body. The at least one controller is configured to obtain a current position of the valve body of each of the control valves at a time during a performance of a test program using the corresponding position signals, estimate a total flow rate of the hydraulic fluid flows at the time based on the obtained current positions of the control valves, obtain an expected total flow rate corresponding to the time based on at least one prior performance of the test program, and detect a diagnostic condition based on a difference between the estimated total flow rate and the expected total flow rate, and generate a diagnostic signal indicating the detected diagnostic condition.

In some embodiments, the system includes a mapping of a total flow rate of the hydraulic fluid flows during the at least one prior performance of the test program and the expected total flow rate corresponds to the total flow rate indicated by the mapping at the time.

In some embodiments, the at least one controller is configured to obtain the expected total flow rate corresponding to the time using a process comprising for each control valve, obtaining an expected position of the valve body corresponding to the time based on the at least one prior performance of the test program, and calculating the expected total flow rate of the hydraulic fluid flows based on a sum of the expected positions.

In some embodiments, each of the hydraulic actuators includes a cylinder and an actuator rod including a piston contained within the cylinder, and movement of the piston and the actuator rod relative to the cylinder drives the actuation.

In some embodiments, the housing each of the control valves includes an inlet port coupled to a supply of high pressure hydraulic fluid, an outlet port coupled to a low pressure return reservoir, a first port coupled to a first working volume formed by an interior of the cylinder and the piston and a second port coupled to a second working volume formed by the interior of the cylinder and the piston.

In some embodiments, for each control valve, the position of the valve body directs the hydraulic fluid flow received at the inlet port to one of the first and second ports or neither of the first and second ports and controls a flow rate of the hydraulic fluid flow.

In some embodiments, each hydraulic actuator includes a corresponding actuation sensor configured to generate a feedback signal that is indicative of a parameter of the corresponding actuation, and the at least one controller is configured to generate a control reference signal for each control valve corresponding to a desired actuation by the corresponding controller based on a test program and generate an actuator command signal for each control reference signal based on a difference between the control reference signal and the corresponding feedback signal. Each actuator command signal directs the corresponding valve body driver to adjust the position of the valve body.

In some embodiments, the at least one controller is configured to perform a safety measure when the difference meets a threshold condition.

In some embodiments, the safety measure includes issuing an audible and/or visible alarm or signal, issuing an electronic notification, directing the valve body drivers to adjust the position of the corresponding valve body to restrict or block the hydraulic fluid flow to the hydraulic actuator, and/or closing a safety input valve controlling the hydraulic fluid flows to the hydraulic actuators.

Another method controls a dynamic testing system, which includes a test station and at least one controller. The test station includes a plurality of hydraulic actuators, each configured to receive a hydraulic fluid flow and drive an actuation of a test subject using the hydraulic fluid flow during a test, and a plurality of control valves, each corresponding to one of the hydraulic actuators. Each control valve includes a housing, a valve body contained within the housing having a position that controls a flow rate and direction of the corresponding hydraulic fluid flow, a valve body driver configured to adjust the position of the valve body based on a reference signal, and a valve position sensor configured to output a position signal that is indicative of the position of the valve body. The method is performed by the at least one controller and includes obtaining a current position of the valve body of each of the control valves at a time using the corresponding position signals, estimating a total flow rate of the hydraulic fluid flows at the time based on the obtained current positions of the control valves, obtaining an expected total flow rate corresponding to the time based on at least one prior performance of the test program, detecting a diagnostic condition based on a difference between the estimated total flow rate and the expected total flow rate, and generating a diagnostic signal indicating the detected diagnostic condition.

In some embodiments, the system includes a mapping of a total flow rate of the hydraulic fluid flows during the at least one prior performance of the test program and the expected total flow rate corresponds to the total flow rate indicated by the mapping at the time.

In some embodiments, obtaining the expected total flow rate corresponding to the time comprises for each control valve, obtaining an expected position of the valve body corresponding to the time based on the at least one prior performance of the test program and calculating the expected total flow rate of the hydraulic fluid flows based on a sum of the expected positions.

In some embodiments, each of the hydraulic actuators includes a cylinder and an actuator rod including a piston contained within the cylinder, wherein movement of the piston and the actuator rod relative to the cylinder drives the actuation.

In some embodiments, the housing each of the control valves includes an inlet port coupled to a supply of high pressure hydraulic fluid, an outlet port coupled to a low pressure return reservoir, a first port coupled to a first working volume formed by an interior of the cylinder and the piston and a second port coupled to a second working volume formed by the interior of the cylinder and the piston. For each control valve, the position of the valve body directs the hydraulic fluid flow received at the inlet port to one of the first and second ports or neither of the first and second ports and controls a flow rate of the hydraulic fluid flow.

In some embodiments, each hydraulic actuator includes a corresponding actuation sensor configured to generate a feedback signal that is indicative of a parameter of the corresponding actuation.

In some embodiments, the at least one controller is configured to generate a control reference signal for each control valve corresponding to a desired actuation by the corresponding controller based on a test program and generate an actuator command signal for each control reference signal based on a difference between the control reference signal and the corresponding feedback signal. Each actuator command signal directs the corresponding valve body driver to adjust the position of the valve body.

In some embodiments, the method includes performing a safety measure when the difference meets a threshold condition.

In some embodiments, the safety measure includes issuing an audible and/or visible alarm or signal, issuing an electronic notification, directing the valve body drivers to adjust the position of the corresponding valve body to restrict or block the hydraulic fluid flow to the hydraulic actuator, and/or closing a safety input valve controlling the hydraulic fluid flows to the hydraulic actuators.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the Background.

### BRIEF DESCRIPTION OF THE DRAWINGS

FIG. 1 is a simplified diagram of an example of a dynamic testing system, in accordance with embodiments of the present disclosure.
FIGS. 2 and 3 are schematic diagrams of an example of a test station, in accordance with embodiments of the present disclosure.
FIG. 4 is a simplified diagram illustrating diagnostic functions that may be performed using a valve body position signal, in accordance with embodiments of the present disclosure.
FIG. 5 is a flowchart illustrating a diagnostics method, in accordance with embodiments of the present disclosure.
FIG. 6 is a chart illustrating a pattern of valve body positions over time during the performance of a test program, in accordance with embodiments of the present disclosure.
FIG. 7 is a flowchart illustrating an example of a method for forming the mapping, in accordance with embodiments of the present disclosure.
FIG. 8 is a flowchart illustrating a method of controlling a dynamic testing system, in accordance with embodiments of the present disclosure.
FIG. 9 is a simplified diagram of an example of a controller, in accordance with embodiments of the present disclosure.

### DETAILED DESCRIPTION OF ILLUSTRATIVE EMBODIMENTS

Embodiments of the present disclosure are described more fully hereinafter with reference to the accompanying drawings. Elements that are identified using the same or similar reference characters refer to the same or similar elements. The various embodiments of the present disclosure may, however, be embodied in many different forms and should not be construed as limited to the embodiments set forth herein. Rather, these embodiments are provided so that this disclosure will be thorough and complete, and will fully convey the scope of the present disclosure to those skilled in the art.

Functions recited herein may be performed by a single controller, multiple controllers, or at least one controller. As used herein, when one or more functions are described as being performed by "a controller," such as a specific controller, one or more controllers, or at least one controller, embodiments include the performance of the function(s) by a single controller or processor or multiple controllers or processors, unless otherwise specified. Furthermore, as used herein, when multiple functions are performed by at least one controller, all of the functions may be performed by a single controller, or some functions may be performed by one controller and other functions may be performed by another controller. Thus, the performance of one or more functions by at least one controller does not require that all of the functions are performed by each of the controllers.

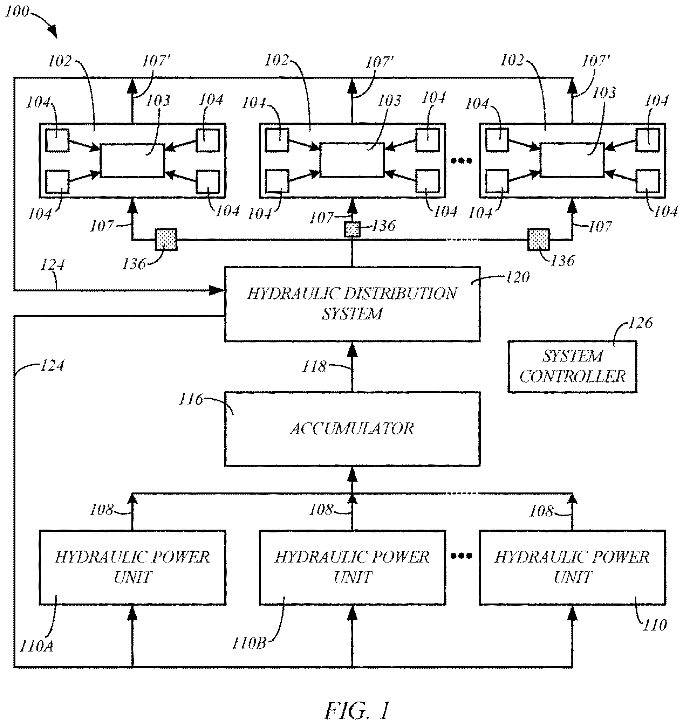

FIG. 1 is a simplified diagram of an example of a dynamic testing system 100, in accordance with embodiments of the present disclosure. The testing system 100 may include one or more test stations 102, each of which may be configured to perform a test or conditions simulation through the application of forces and/or displacements to a test subject 103 (e.g., an automobile, a building, etc.) using hydraulic actuators 104, which are driven by flows 107 of hydraulic fluid.

The flows 107 may be provided based on hydraulic fluid flows 108 generated by one or more hydraulic power units (HPU's) 110. The system 100 may include an accumulator 116 that stores pressurized hydraulic fluid received from the HPU's 110 and discharges a hydraulic fluid flow 118 that may be used to form the flows 107 supplied to the test stations 102. The system 100 may include a distributor 120 that receives the hydraulic fluid flows from the HPU's 110 and/or the accumulator 116 and distributes the flows 107 of hydraulic fluid to the test stations 102. Other configurations of the system 100 may be used to supply the test stations 102 with the demanded hydraulic fluid flows 107.

The system 100 may be a closed system, in which the low pressure hydraulic fluid flows 107' discharged from the test stations 102 are returned, such as a combined return flow 124 through the hydraulic distribution system 120 back to the HPU's 110, for example.

A system controller 126 may operate to control various aspects of the system 100 including functions of the HPU's 110, valving (e.g., valving of the accumulator and/or distributor) and/or other aspects of the system 100 to supply the test stations 102 with the demanded hydraulic fluid flows 107.

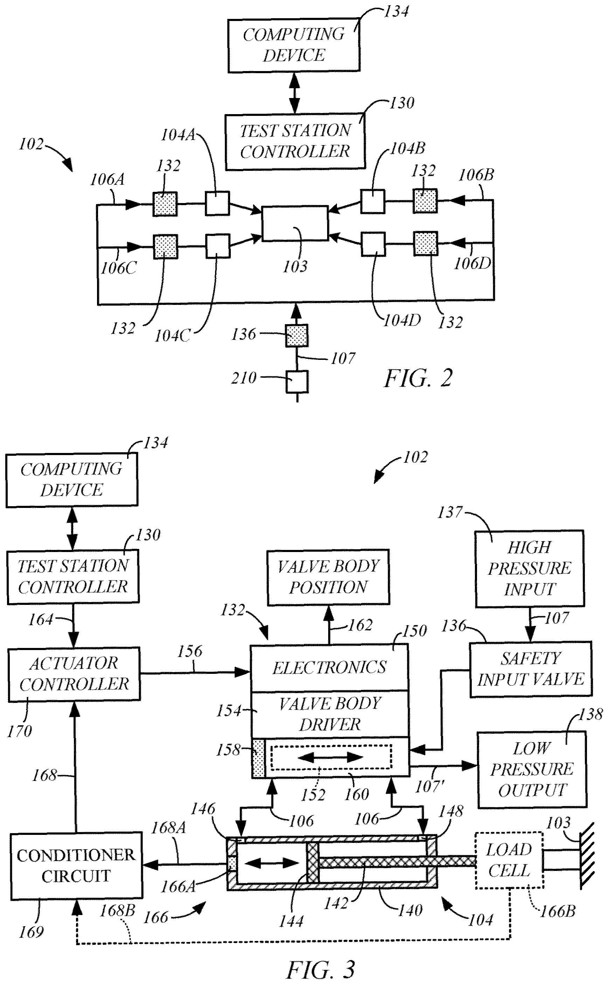

FIG. 2 is a schematic diagram of an example of a test station 102, in accordance with embodiments of the present disclosure. As mentioned above, the test station 102 includes a plurality of hydraulic actuators 104, such as hydraulic actuators 104A-D, that are configured to apply a force and/or drive a motion to the test subject 103. Each of the hydraulic actuators 104A-D is driven by a corresponding flow portion 106A-D of the hydraulic fluid flow 107 that is generated by one or more of the hydraulic power units 110 (FIG. 1).

Each test station 102 may include a test station controller 130, which is generally configured to perform a test on the test subject 103 based on the execution of a test program stored in a non-transitory computer-readable medium, for example. The test station controller 130 controls the actuators 104 to apply forces and/or motions in a conventional manner to the test subject 103 in response to the execution of the test program through the control of the hydraulic fluid flows 106A-D using corresponding control valves 132.

A computing device 134 may be configured to generate a graphical user interface through which a user may interact with and/or control the test station 102, the execution of a test program, view data, and/or perform other tasks, such as through a series of communications with the test station controller 130, for example.

One or more safety input valves 136, such as solenoid valves, may control the high pressure hydraulic fluid flow 107 input to the test stations 102, such as in response to a control signal from the test station controller 130, the system controller 126, or another suitable device (e.g., emergency stop), for example. Each safety input valve 136 has a fully open state that provides a mostly unrestricted pathway for the hydraulic fluid flow 107 to travel to the test station 102. The valve 136 also has a closed or substantially closed state, in which the valve 136 blocks or substantially blocks the hydraulic fluid flow 107 to the test station 102. The solenoid of the valve 136 may have a default or deenergized state corresponding to the closed or substantially closed state.

When the safety input valve 136 is in the substantially closed state, an opening in the valve 136 allows the hydraulic fluid flow 107 to travel to the test station 102. However, the flow rate of the flow 106 is substantially restricted. This limits the flow rate of the hydraulic fluid 107 to the test station 102 and to the actuators 104 regardless of the settings of the control valves 132, thus limiting the speed at which the actuators 104 can move.

The safety input valve 136 may be set to the substantially closed state by the test station controller 130, the system controller 126 or another controller of the system 100, such as in response to a detected malfunction or before operators enter the testing area where the actuators 104 and the test subject 103 are located, for example. Thus, the one or more safety input valves 136 provide a level of safety for the testing stations 102.

FIG. 3 is a simplified diagram of an example of a test station 102, in accordance with embodiments of the present disclosure. As discussed above, the test station 102 includes a test station controller 130 and at least one hydraulic actuator 104 and its corresponding control valve 132. While only a single hydraulic actuator 104 and control valve 132 pair is shown in FIG. 3 to simplify the illustration, it is understood that the test station 102 may include two or more actuators 104 and corresponding control valves 132, such as indicated in FIG. 2.

The control valve 132 for each hydraulic actuator 104 operates to control a flow rate (e.g., gallons per minute) of the flow 106 of hydraulic fluid to the actuator 104 that is received from a high pressure source (e.g., HPU 110) 137, and the discharge of the flow 107' to a low pressure reservoir 138 (e.g., return to reservoir of HPU 110). Additionally, the control valve 132 controls the direction of the flow through the hydraulic actuator 104 to control the actuation that is applied to the test subject 130.

In one example, the hydraulic actuator 104 includes a cylinder 140 and an actuator rod 142 having a piston 144 that is contained within the cylinder 140. The cylinder 140 includes first and second ports 146 and 148, through which the flow 106 of hydraulic fluid travels. The valve 132 controls the direction of the hydraulic fluid flow 106 through the first and second ports 146 and 148 to control the direction of movement of the actuator rod 142 and the speed at which the actuator rod 142 moves relative to the cylinder 140 based on the flow rate of the hydraulic fluid flow 106.

The control valve 132 may take on any suitable form. Examples of the control valve 132 include servo valves or solenoid valves that are configured to provide the variable flow rate and direction control described above. As indicated in FIG. 3, the control valve 103 generally includes electronics 150, a valve body 152 and a valve body driver 154. The valve body 152 has an adjustable position that controls the direction and flow rate of the hydraulic fluid flow 106. The electronics 150 are configured to control the valve body driver 154 to adjust the position of the valve body 152 in response to an actuator command signal 156. For example, the valve body 152 may take the form of a spool and the valve body driver 154 may take the form of a servo. An example of this type of control valve 132 is described in U.S. Publication No. 2016/0123355.

In some embodiments, the control valve 132 includes a position sensor 158 that is configured to detect the position of the valve body 152, such as relative to a housing 160 of the valve 132. The electronics 150 are configured to output a position signal 162 that is indicative of the detected position of the valve body 152 and, thus, the flow rate and direction of the flow 106 through the valve 132. As discussed below, the position signal 162 may be used to facilitate various diagnostics on the system 100, such as diagnostics on the valve 132, the corresponding hydraulic actuator 104 and the test station 102, for example.

During the execution of a test program, the test station controller 130 issues reference signals 164 relating to desired actuations that are to be performed by the hydraulic actuators 104 on the test subject 103. Each actuator 104 includes an actuation sensor 166 that is configured to sense a parameter of the actuation performed by the actuator 104, such as a displacement and/or a force, and issue a feedback signal 168 that is indicative of the sensed parameter. The actuation sensor 166 may comprise, for example, a displacement sensor 166A, such as a linear variable differential transformer that is configured to detect a displacement and/or movement of the actuator rod 142 relative to the cylinder 140 and produce a feedback signal 168A that is indicative of the detected displacement and/or movement, and/or a load cell 166B that is configured to detect a force applied by the actuator 104, such as a force applied by the actuator rod 142 to the test subject 103, and produce a feedback signal 168B that is indicative of the detected force, as indicated in FIG. 3. A conventional conditioner circuit 169 may be used to process the signals 168A and/or 168B (e.g., amplify, filter, etc.) to produce the final feedback signal 168.

An actuator controller 170 is configured to compare the reference signals 164 and the feedback signal 168 corresponding to each actuator 104 and issue a differential signal as the command signal 156 for the corresponding control valve 132. While the actuator controller 170 is illustrated in FIG. 3 as receiving a single reference signal 164 and issuing a single command signal 156 corresponding to the depicted actuator 104, the actuator controller 170 may be configured to receive multiple reference signals 164 from the test station controller 130 for each hydraulic actuator 104 of the test station 102 and corresponding feedback signals 168, and issue command signals 156 to control the valves 132.

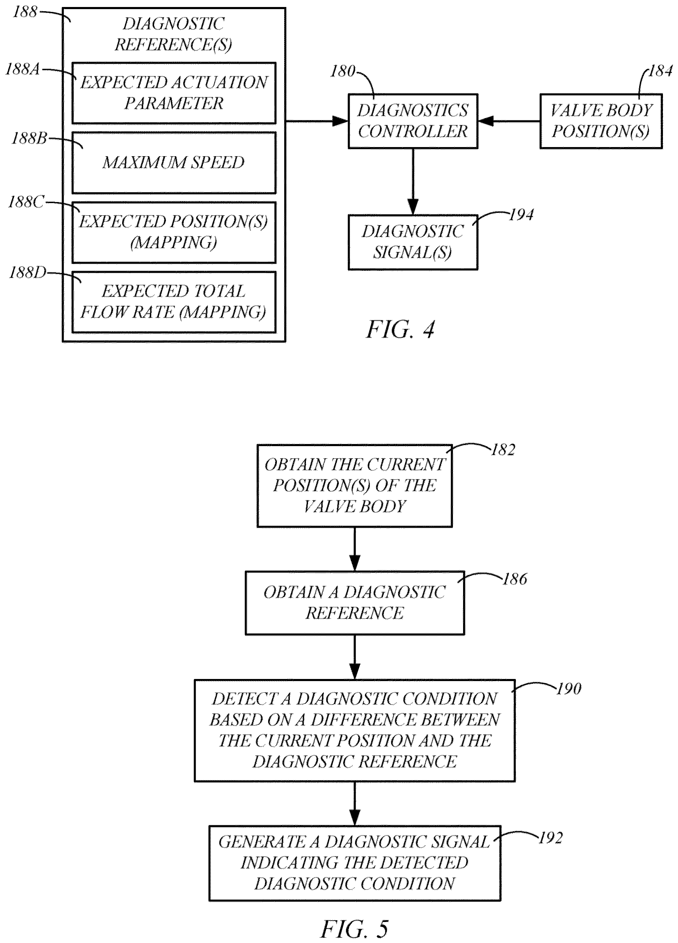

Some embodiments of the present disclosure relate to dynamic testing system diagnostics using the position signals 162 issued by the control valves 132. FIG. 4 is a simplified diagram illustrating diagnostic functions that may be performed using a valve body position signal 162, in accordance with embodiments of the present disclosure. A diagnostics controller 180 represents at least one controller of the system 100, such as the system controller 126, the test station controller 130 and/or a separate controller of the system 100. The diagnostics controller 180 is generally configured to perform the method illustrated by the flowchart of FIG. 5. While the illustrated method relates to diagnostics performed based on a valve body position of a single control valve 132, it is understood that the diagnostics controller 180 may be configured to perform the method on multiple valves 132.

At 182 of the method, the diagnostics controller 180 obtains a current position 184 of the valve body 152 of a valve 132, and at 186, the diagnostic controller 180 obtains a diagnostic reference 188. In some embodiments, the diagnostics controller 180 obtains the current position by receiving and possibly processing the corresponding position signal 162 (FIG. 3), or by accessing the current position 184 from memory of the system 100, such as after the position signal 162 has been received and processed by a controller of the system 100. The diagnostic controller 180 may obtain the diagnostic reference 188 from memory of the system 100. As used herein, "memory" corresponds to non-transitory computer-readable media.

The current position 184 may take the form of a value that is obtained after processing the corresponding position signal 162. For example, since the position signal 162 indicates a position (value) of the valve body 152 relative to the housing 160 and is directly related to the flow rate of the flow 106, it may be beneficial to convert the position of the valve body 152 into value representing the flow rate, a value representing the speed of the actuator rod 142 of the corresponding actuator 104, or another value that allows for a comparison to the value of the diagnostic reference 188. Accordingly, the position 184 may take these or another suitable form.

At 190 of the method, the diagnostics controller 180 detects a diagnostic condition based on a difference between the current position 184 and the diagnostic reference 188. At 192 of the method, the diagnostic controller 180 generates one or more diagnostic signals 194 that indicate the detected diagnostic condition, as indicated in FIG. 4.

In some embodiments, the diagnostic signal 194 indicates the corresponding valve 132 and/or hydraulic actuator 104. This may be accomplished, for example, by including one or more identification codes in the signal 194, or based on the channel in which the diagnostic signal 194 is communicated (e.g., channel of a multiplexer). As a result, the signal 194 may allow a technician to easily target the malfunction, thereby saving time in correcting the malfunction and reducing downtime of the test station 102.

The detected diagnostic condition may indicate a malfunction, such as when the difference meets a threshold condition, such as being greater than, equal to, or less than a predefined value. The malfunction may relate to a leak of hydraulic fluid at the valve 132, the hydraulic actuator 104, or another location along the pathway through which the flow 106 travels, a malfunction in the operation of the position sensor 158 and/or the actuation sensor 166, a malfunction in the operation of the valve electronics 150, a malfunction of the actuation performed by the hydraulic actuator 104, and/or another malfunction.

In some embodiments, a controller of the system 100 performs one or more safety measures when the diagnostic condition indicates a malfunction. Examples of the safety measure include a notification of the malfunction, such as through an audible and/or visible alarm or signal, the issuance of an electronic message, or another notification. The safety measure may include an action to prevent the further operation of the hydraulic actuator 104 and/or the test station 102. For example, the actuator controller 170 may issue an actuator command 156 that directs the position of the valve body 152 to restrict or block the hydraulic fluid flow 106 to the actuator 104 and reduce the flow rate of the flow 106 to zero or close to zero (e.g., less than 0.5 gallons per minute) to clamp or substantially clamp the actuator rod 142 in its current position relative to the housing 140 and stop the actuation. A controller of the system 100 may also close one or more safety input valves 136 to limit the hydraulic fluid flow 106 to the test station 102. Other safety measures may also be employed.

Since the current position 184 of the valve body 152 indicates a direction and flow rate of the hydraulic flow 106 through the valve 132 and the hydraulic actuator 104 for a given pressure of the hydraulic fluid (e.g., 3000 psi), a correlation exists between the current position 184 of the valve body 152 and one or more parameters of the actuation performed by the hydraulic actuator 104, such as the direction and speed of movement of the actuator rod 142 relative to the cylinder 140, and/or the force applied by the hydraulic actuator 104. Accordingly, in one embodiment, the diagnostic reference 188 includes an expected actuation parameter 188A corresponding to the valve body position 184.

In one example, the actuation reference 188A indicates, for a given valve body position 184, an expected actuation parameter, such as expected speed and/or direction of movement of the actuator rod 142 relative to the cylinder 140 or an expected force applied by the hydraulic actuator 104. These actuation parameters may be determined based on parameters of the hydraulic actuator (e.g., cross-sectional area of the cylinder 140 or piston 144) and the pressure of the fluid flow 106. The expected actuation parameter 188A may be determined through a real-time calculation or using a mapping of the expected actuation parameter 188A to positions of the valve body 152 stored in memory and accessible by the diagnostic controller 180.

A diagnostic condition may be detected (step 190) based on a difference between the expected actuation parameter 188A and the feedback signal 168 relating to the corresponding actual actuation parameter detected or measured by the actuation sensor 166. When the difference meets a threshold condition, the diagnostic condition may indicate a malfunction, such as a hydraulic fluid leak, a failure of the position sensor 158 and/or a failure of the actuation sensor 166.

When the expected actuation parameter 188A relates to the feedback signal 166A and indicates a direction of movement or speed of the actuator rod 142 relative to the cylinder 140, the diagnostics controller 180 may determine a difference between this measured actuation parameter and the expected direction and/or movement of the actuator rod 142 indicated by the actuation reference 188A to detect the diagnostic condition in step 190. The diagnostic signal 194 indicating the detected diagnostic condition may then be generated in step 192. If the difference exceeds a threshold condition, the diagnostic signal 194 may indicate a malfunction relating to a leak of hydraulic fluid, a malfunction of the position sensor 158, a malfunction of the displacement sensor 166B, a malfunction of the valve electronics 150, and/or another malfunction. For example, if the speed indicated by the feedback signal 166A is less than the expected speed 188A by a predefined amount, this would tend to indicate a possible leak of hydraulic fluid and/or another malfunction.

When the expected actuation parameter 188A relates to the feedback signal 166B and indicates a force applied by the hydraulic actuator, the diagnostics controller 180 may determine a difference between this measured force and the expected force indicated by the actuation reference 188A to detect the diagnostic condition in step 190. The diagnostic signal indicating the detected diagnostic condition may then be generated in step 192. The diagnostic signal 194 indicating the detected diagnostic condition may then be generated in step 192. If the difference exceeds a threshold condition, the diagnostic signal 194 may indicate a malfunction relating to a leak of hydraulic fluid, a malfunction of the position sensor 158, a malfunction of the load cell 166B, a malfunction of the valve electronics 150, and/or another malfunction. For example, if the force indicated by the feedback signal 166B is less than the expected force 188A by a predefined amount, this would tend to indicate a possible leak of hydraulic fluid and/or another malfunction.

The diagnostic reference 188 may include a maximum speed 188B for the actuator rod 142 relative to the cylinder 140 stored in memory. The maximum speed 188B is directly related to the flow rate of the hydraulic fluid flow 106 and parameters of the hydraulic actuator (e.g., cross-sectional area of the cylinder 140 or piston 144). Thus, for example, the maximum speed 188B diagnostic reference may take the form of a value corresponding to a speed limit of the actuator rod 142 or a flow rate of the hydraulic fluid flow.

The maximum speed 188B may be set by a user and stored in memory based on parameters of the hydraulic actuator 104 (e.g., speed and/or force limit), a location or function performed by the hydraulic actuator 104, and/or a state of the test station 102. For example, the maximum speed 188B may have a high setting for when the test station 102 is performing a test program, and a relatively low setting (e.g., less than about 10-15 millimeters per second or a corresponding flow rate) when workers are in the vicinity of the hydraulic actuator 104.

A diagnostic condition may be detected (step 190) based on a difference between the maximum speed 188B and the valve body position 184. The maximum speed 188B and/or the valve body position 184 may be converted as necessary to allow for a direct comparison of the values, such that the difference may be determined. When the difference meets a threshold condition, such as when the valve body position 184 indicates a speed that matches or exceeds the maximum speed 188B diagnostic reference, the diagnostic signal 194 may indicate an overspeed malfunction of the hydraulic actuator 104. A controller of the system 100 may then perform a safety measure, such as discussed above to stop or limit movement of the actuator rod 142.

In accordance with another embodiment, a diagnostic condition is detected using an expected position 188C diagnostic reference relating to an expected position of the valve body 152 and an expected flow rate of the hydraulic fluid flow 106 through one of the valves 132 of the test station 102 at a given time during the performance of a test program. A diagnostic condition, such as a leak of hydraulic fluid, may be detected (step 190) when a difference between the current valve body position 184 and the expected position 188C meets a threshold condition. For example, when the current valve body position 184 indicates a flow rate of the hydraulic fluid flow 106 that is greater than the flow rate indicated by the expected position 188C by a predefined threshold, this may indicate the existence of a leak of hydraulic fluid in the pathway through the valve 132 and the hydraulic actuator 104.

The expected position 188C may be obtained (step 186) using various techniques. In one embodiment, the expected position 188C is obtained based on one or more prior performances of the test program.

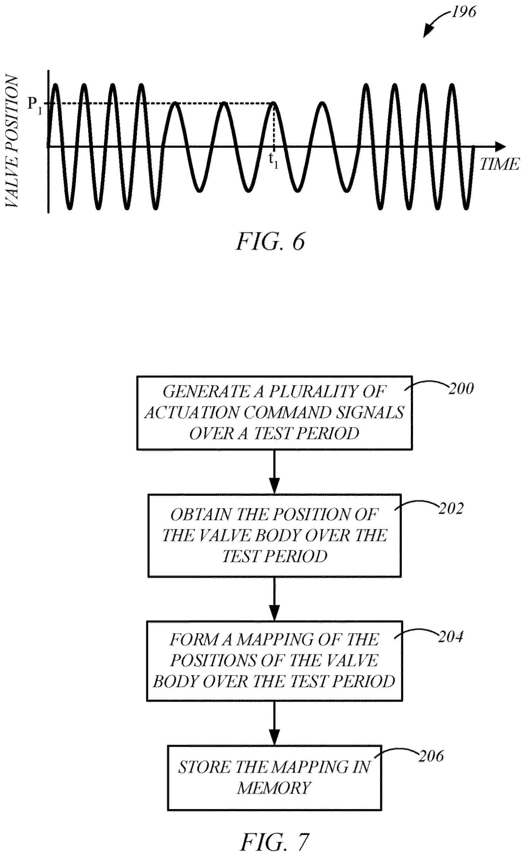

During the performance of a test program, the position of the valve body 152 of each valve 132 of the test station 102 is adjusted over time in response to the actuation command 156 to adjust the flow rate and direction of the hydraulic fluid flow 106 and cause the corresponding hydraulic actuator 104 to perform a desired actuation on the test subject 103. Since the test program may be repeated numerous times by the test station, the valve body 152 of each of the valves 132 will, barring a significant malfunction, substantially repeat a pattern of positions over the period of time that the test program is performed. An example of such a pattern 196 of a position 184 of a valve body 152 of a control valve 132 over time during the performance of a test program is illustrated in FIG. 6.

In some embodiments, a mapping of the pattern 196 of the valve body position 184 over the test period is formed, from which the expected valve body positions 188C may be obtained in step 186 of the method. The mapping is stored in memory and may take on any suitable form.

In one example, the mapping includes a series of samplings of the valve body position 184 in the pattern 196 at various times during the performance of the test. FIG. 7 is a flowchart illustrating an example of a method for forming the mapping, in accordance with embodiments of the present disclosure.

At 200 of the method, a plurality of command signals 156 are generated over a test period during the performance of a test program. As mentioned above, the command signals 156 control the position of the valve body 152, which controls the actuation performed by the hydraulic actuator 104. At 202, a plurality of the positions 184 of the valve body 152 are obtained over the test period, such as based on the position signal 162 from the position sensor 158, for example. At 204, the plurality of obtained positions 184 are then mapped over the test period, and the mapping is stored in memory at 206.

Accordingly, embodiments of the method step 186 (FIG. 5) include the diagnostic controller 180 obtaining the valve body position 184 at a given time t₁ during the performance of a test program. At 186, the expected position 188C Pi corresponding to the time t₁ is obtained from the mapping, as indicated in FIG. 6. The diagnostic signal 194 is generated (step 192) that indicates a diagnostic condition, which is detected (step 190) based on a difference between the current position 184 and the expected position 188C (Pi).

As mentioned above, when the difference meets a threshold condition, such as being greater than a predefined threshold amount, the diagnostic condition may be a malfunction, such as a leak in the fluid path through the valve 132 and the corresponding hydraulic actuator 194, for example. When a malfunction is indicated by the diagnostic signal 194, the system controller 126 or another controller of the system 100 may perform a safety measure, such as one or more of the safety measures described above. For example, the safety measure may include closing the safety input valve 136 and/or issuing actuator command signals 156 that adjust the valve body 152 to a position that prevents or substantially prevents the flow 106 from traveling through the valve 132.

Additional embodiments of the present disclosure relate to the detection of a malfunction, such as a leak of hydraulic fluid, in the test station 102 based on an estimated total flow rate of the hydraulic fluid flows 106 (e.g., flows 106A-D in FIG. 2) through the control valves 132 at a given time during the performance of a test program and an expected total flow rate 188D diagnostic reference (FIG. 4) corresponding to an expected total flow rate of the hydraulic fluid flows 106 at the time.

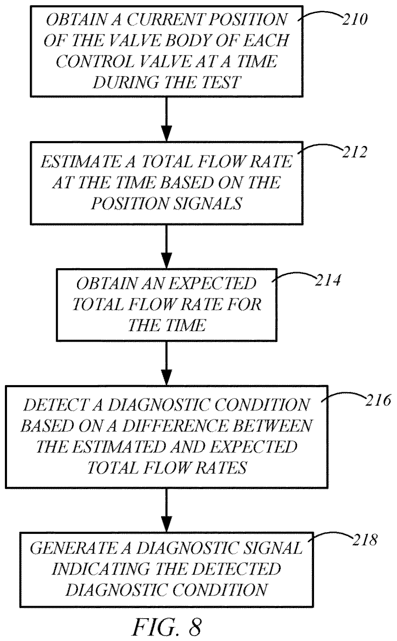

FIG. 8 is a flowchart illustrating a method performed by the diagnostic controller 180 to control the system 100, such as a test station 102 of the system 100, in accordance with this embodiment of the present disclosure that may be performed by the system 100. At a time during the performance of a test program, the current positions 184 of the control valves 132 of the test station 102 are obtained using the diagnostic controller 180. At 212, a total flow rate of the hydraulic fluid flows 106 through the control valves 132 is estimated at the time.

As used herein, the estimated total flow rate may be a value that is indicative of or related to the total of the flow rates of the hydraulic fluid flows 106 through the individual control valves 132 or the hydraulic fluid flow 107 input to the test station 102. In one embodiment, the estimated total flow rate of the hydraulic fluid flows 106 through the control valves 132 at the time is determined based on the current positions 184 of the corresponding valve bodies 152 at the time, which may be indicated by the corresponding position signals 162. In one example, the estimated total flow rate may be determined based on a sum of the current positions 184 at the time, which may be calculated by the diagnostic controller 180.

At 214 of the method, the expected total flow rate 188D is obtained by the diagnostic controller 180, such as from memory of the system 100. In some embodiments, the expected total flow rate 188D is determined based on one or more prior performances of the test program. In one example, the expected total flow rate 188D may be obtained from or represented by a total flow rate mapping of the flow rate 107 to the test station 102 over time during the performance of the test program. The total flow rate mapping may be stored in memory that is accessible to the diagnostic controller 180.

In some embodiments, the system 100 may include a flowmeter 210 that is configured to measure the flow rate of the hydraulic fluid flow 107 traveling through the test station 102, as indicated in FIG. 2. The total flow rate mapping may be established, for example, by sampling the measured flow rate of the hydraulic fluid flow 107 during the performance of the test program.

In another example, the expected total flow rate 188D may be determined based on the mapping of the pattern 196 of valve body positions 184 during one or more prior performances of the test discussed above. Here, the expected position mappings may either be summed together to form the total flow rate mapping, or the diagnostic controller 180 may use the expected position mappings to obtain an expected position of each of the valve bodies 152 at the time. The expected positions may then be summed together by the diagnostic controller 180 to obtain the expected total flow rate 188D for the time in step 214.

At 216, a diagnostic condition is detected based on a difference between the estimated and expected total flow rates, and a diagnostic signal 194 that is indicative of the diagnostic condition is generated at 218. When the difference meets a threshold condition, such as being greater than a predefined threshold amount, the diagnostic condition may be a malfunction, such as a leak in the fluid path through the valves 132 and the corresponding hydraulic actuators 194, for example. When a malfunction is indicated by the diagnostic signal 194, the system controller 126 or another controller of the system 100, may perform a safety measure, such as one or more of the safety measures described above. For example, the safety measure may include closing the safety input valve 136 and/or issuing actuator command signals 156 that adjust the valve bodies 152 to positions that prevent or substantially prevent the flows 106 from traveling through the valves 132.

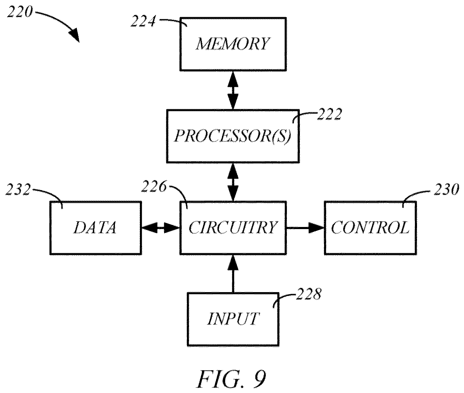

The controllers of the system 100, such as the system controller 126, the test station controller 130, the actuator controller 170, the diagnostic controller 180, the valve electronics 150, etc., may take on any suitable form to control the various functions described herein. In one example, the controllers of the system 100 may take the form of the example controller 220 shown in FIG. 9. The controller 220 may include one or more processors 222 and memory 224, which may be local memory or memory that is accessible to the controller 220. The one or more processors 222 are configured to perform various functions described herein in response to the execution of instructions contained in the memory 224, such as a test program, for example.

The one or more processors 222 may be components of one or more computer-based systems, and may include one or more control circuits, microprocessor-based engine control systems, and/or one or more programmable hardware components, such as a field programmable gate array (FPGA). The memory 224 represents local and/or remote memory or computer-readable media. As used herein, such memory 224 comprises any suitable patent subject matter eligible computer-readable media and does not include transitory waves or signals. Examples of the memory 224 include conventional data storage devices, such as hard disks, CD-ROMs, optical storage devices, magnetic storage devices and/or other suitable data storage devices. The controller 220 may include circuitry 226 for use by the one or more processors 222 to receive input signals 228 (e.g., sensor signals), issue control signals 230 (e.g., signals 156, 164, etc.) and/or communicate data 232, such as in response to the execution of the instructions stored in the memory 224 by the one or more processors 222.

Although the embodiments of the present disclosure have been described with reference to preferred embodiments, workers skilled in the art will recognize that changes may be made in form and detail without departing from the spirit and scope of the present disclosure.

## Claims

1. A dynamic testing system comprising:
a test station including:
a hydraulic actuator configured to drive an actuation of a test subject using a hydraulic fluid flow; and
a control valve comprising:
a housing;
a valve body contained within the housing having a position that controls a flow rate and direction of the hydraulic fluid flow;
a valve body driver configured to adjust the position of the valve body based on a reference signal; and
a valve position sensor configured to output a position signal that is indicative of the position of the valve body; and
at least one controller configured to:
obtain a current position of the valve body using the position signal;
obtain a diagnostic reference;
detect a diagnostic condition based on a difference between the current position and the diagnostic reference; and
generate a diagnostic signal indicating the detected diagnostic condition.

2. The dynamic testing system according to claim 1, wherein:
the hydraulic actuator includes:
a cylinder; and
an actuator rod including a piston contained within the cylinder;
wherein movement of the piston and the actuator rod relative to the cylinder drives the actuation;
the housing of the control valve includes:
an inlet port coupled to a supply of high pressure hydraulic fluid;
an outlet port coupled to a low pressure return reservoir;
a first port coupled to a first working volume formed by an interior of the cylinder and the piston; and
a second port coupled to a second working volume formed by the interior of the cylinder and the piston; and
the position of the valve body directs the hydraulic fluid flow received at the inlet port to one of the first and second ports or neither of the first and second ports and controls a flow rate of the hydraulic fluid flow.

3. The dynamic testing system according to claim 2, wherein:
the test station includes an actuation sensor configured to generate a feedback signal that is indicative of a parameter of the actuation;
the at least one controller is configured to:
generate a control reference signal corresponding to a desired actuation based on a test program; and
generate an actuator command signal based on a difference between the control reference signal and the feedback signal;
the actuator command signal directs the valve body driver to adjust the position of the valve body; and
in further embodiments, wherein the diagnostic reference includes a maximum speed of the actuator rod, and/or the diagnostic reference includes an actuation parameter relating to the feedback signal.

4. The dynamic testing system according to any one of the preceding claims, wherein:
the actuation sensor comprises a displacement sensor;
the feedback signal indicates a direction of movement or speed of the actuator rod relative to the cylinder; and
the actuation parameter relates to the direction of movement or speed indicated by the feedback signal, or
wherein:
the actuation sensor comprises a load cell;
the feedback signal indicates a force applied by the actuator; and
the actuation parameter relates to the force indicated by the feedback signal.

5. The dynamic testing system according to claim 3, wherein:
the current position of the valve body is obtained by the at least one controller during a performance of a test program by the test station;
the diagnostic reference includes an expected position of the valve body that is based on at least one prior performance of the test program; and
in one embodiment, wherein the expected position of the valve body is obtained based on a mapping of positions of the valve body over time during the at least one prior performance of the test program stored in a computer-readable medium.

6. The dynamic testing system according to any one of the preceding claims, wherein:
the at least one controller is configured to perform a safety measure when the difference meets a threshold condition; and
the safety measure includes:
issuing an audible and/or visible alarm or signal;
issuing an electronic notification;
directing the valve body driver to adjust the position of the valve body to restrict or block the hydraulic fluid flow to the hydraulic actuator; and/or
closing a safety input valve controlling the flow of the hydraulic fluid to the hydraulic actuator.

7. A method of controlling a dynamic testing system, which comprises:
a test station including:
a hydraulic actuator configured to drive an actuation of a test subject using a hydraulic fluid flow; and
a control valve comprising:
a housing;
a valve body contained within the housing having a position that controls a flow rate and direction of the hydraulic fluid flow;
a valve body driver configured to adjust the position of the valve body based on a reference signal; and
a valve position sensor configured to output a position signal that is indicative of the position of the valve body; and
at least one controller, the method, which is performed by the at least one controller, comprises:
obtaining a current position of the valve body using the position signal;
obtaining a diagnostic reference;
detecting a diagnostic condition based on a difference between the current position and the diagnostic reference; and
generating a diagnostic signal indicating the detected diagnostic condition.

8. The method according to claim 7, wherein:
the hydraulic actuator includes:
a cylinder; and
an actuator rod including a piston contained within the cylinder;
wherein movement of the piston and the actuator rod relative to the cylinder drives the actuation;
the housing of the control valve includes:
an inlet port coupled to a supply of high pressure hydraulic fluid;
an outlet port coupled to a low pressure return reservoir;
a first port coupled to a first working volume formed by an interior of the cylinder and the piston; and
a second port coupled to a second working volume formed by the interior of the cylinder and the piston; and
the position of the valve body directs the hydraulic fluid flow received at the inlet port to one of the first and second ports or neither of the first and second ports and controls a flow rate of the hydraulic fluid flow.

9. The method according to claim 8, wherein:
the test station includes an actuation sensor configured to generate a feedback signal that is indicative of a parameter of the actuation; and
the method includes:
generating a control reference signal corresponding to a desired actuation based on a test program,
generating an actuator command signal based on a difference between the control reference signal and the feedback signal,
wherein the actuator command signal is used to direct the valve body driver to adjust the position of the valve body,
and in one embodiment, the current position of the valve body is obtained by the at least one controller during a performance of a test program by the test station, and the diagnostic reference includes an expected position of the valve body that is based on at least one prior performance of the test program,
and in further embodiments, wherein the diagnostic reference includes a maximum speed of the actuator rod and/or the diagnostic reference includes an actuation parameter relating to the feedback signal.

10. The method according to any one of claims 7-9, wherein:
the actuation sensor comprises a displacement sensor;
the feedback signal indicates a direction of movement or speed of the actuator rod relative to the cylinder; and
the actuation parameter relates to the direction of movement or speed indicated by the feedback signal, or
wherein:
the actuation sensor comprises a load cell;
the feedback signal indicates a force applied by the actuator; and
the actuation parameter relates to the force indicated by the feedback signal.

11. The method according to any one of claims 7-10, wherein the method includes:
performing a safety measure when the difference meets a threshold condition; and
the safety measure includes:
issuing an audible and/or visible alarm or signal;
issuing an electronic notification;
directing the valve body driver to adjust the position of the valve body to restrict or block the hydraulic fluid flow to the hydraulic actuator; and/or
closing a safety input valve controlling the flow of the hydraulic fluid to the hydraulic actuator.

12. A dynamic testing system comprising:
a test station including:
a plurality of hydraulic actuators, each configured to receive a hydraulic fluid flow and drive an actuation of a test subject using the hydraulic fluid flow during a test; and
a plurality of control valves, each control valve corresponding to one of the hydraulic actuators and comprising:
a housing;
a valve body contained within the housing having a position that controls a flow rate and direction of the corresponding hydraulic fluid flow;
a valve body driver configured to adjust the position of the valve body based on a reference signal; and
a valve position sensor configured to output a position signal that is indicative of the position of the valve body; and
at least one controller configured to:
obtain a current position of the valve body of each of the control vales at a time during a performance of a test program using the corresponding position signals;
estimate a total flow rate of the hydraulic fluid flows at the time based on the obtained current positions of the control valves;
obtain an expected total flow rate corresponding to the time based on at least one prior performance of the test program;
detect a diagnostic condition based on a difference between the estimated total flow rate and the expected total flow rate;
generate a diagnostic signal indicating the detected diagnostic condition, and in further embodiments, wherein:
the system includes a mapping of a total flow rate of the hydraulic fluid flows during the at least one prior performance of the test program; and
the expected total flow rate corresponds to the total flow rate indicated by the mapping at the time; and/or
wherein the at least one controller is configured to obtain the expected total flow rate corresponding to the time using a process comprising:
for each control valve, obtaining an expected position of the valve body corresponding to the time based on the at least one prior performance of the test program; and
calculating the expected total flow rate of the hydraulic fluid flows based on a sum of the expected positions.

13. The dynamic testing system according to claim 12, wherein:
each of the hydraulic actuators includes:
a cylinder; and
an actuator rod including a piston contained within the cylinder;
wherein movement of the piston and the actuator rod relative to the cylinder drives the actuation;
the housing each of the control valves includes:
an inlet port coupled to a supply of high pressure hydraulic fluid;
an outlet port coupled to a low pressure return reservoir;
a first port coupled to a first working volume formed by an interior of the cylinder and the piston; and
a second port coupled to a second working volume formed by the interior of the cylinder and the piston; and
for each control valve, the position of the valve body directs the hydraulic fluid flow received at the inlet port to one of the first and second ports or neither of the first and second ports and controls a flow rate of the hydraulic fluid flow.

14. The dynamic testing system according claim 13, wherein:
each hydraulic actuator includes a corresponding actuation sensor configured to generate a feedback signal that is indicative of a parameter of the corresponding actuation;
the at least one controller is configured to:
generate a control reference signal for each control valve corresponding to a desired actuation by the corresponding controller based on a test program; and
generate an actuator command signal for each control reference signal based on a difference between the control reference signal and the corresponding feedback signal; and
each actuator command signal directs the corresponding valve body driver to adjust the position of the valve body.

15. The dynamic testing system according to any one of claims 12-14, wherein:
the at least one controller is configured to perform a safety measure when the difference meets a threshold condition; and
the safety measure includes:
issuing an audible and/or visible alarm or signal;
issuing an electronic notification;
directing the valve body drivers to adjust the position of the corresponding valve body to restrict or block the hydraulic fluid flow to the hydraulic actuator; and/or
closing a safety input valve controlling the hydraulic fluid flows to the hydraulic actuators.
